# EUROPEAN PATENT APPLICATION

(11) **EP 1 975 897 A2**
(43) Date of publication of application: **01.10.2008**
(21) Application number: 08005688.0
(22) Date of filing: 26.03.2008
(51) Int. Cl.: G08C 17/02

(54) **Vehicle control device and data rewriting system**

(30) Priority: 28.03.2007 JP 2007084175
(71) Applicant: Denso Corporation, Kariya-city, Aichi-pref. 448-8661 (JP)
(72) Inventor: Nakagaki, Yoshio, Kariya-city Aichi-pref., 448-8661 (JP)
(74) Representative: Winter, Brandl, Fürniss, Hübner Röss, Kaiser, Polte Partnerschaft Patent- und Rechtsanwaltskanzlei

(57) **Abstract**

A vehicle control device and a data rewriting system prevent a person having no permission from rewriting the data of the vehicle control device. When the vehicle control device rewrites the data thereof based on rewrite data distributed from a control center (10) through a radio communication network (11), the vehicle control device performs a user identification check (S80, S120) based on the verification whether an ID code manually inputted by a user coincides with an ID code previously stored in a vehicle (20). The vehicle control device permits the user to rewrite the data based on the distributed rewrite data on condition that the user is identified as a privileged user permitted to rewrite the data.

## Description

The present invention relates to a vehicle control device, which rewrites control programs and control data for vehicle control based on data distributed through a radio communication network, and to a data rewriting system for the vehicle control device.

In recent years, it is proposed in JP 5-195859A to rewrite or reprogram control programs and control data of a vehicle control device through a radio communication network such as a mobile telephone line. In this remote reprogramming through the radio communication network, even if a vehicle is not taken in a dealer shop, a maintenance work or the like, the data of the vehicle control device can be updated, so that a problem portion of the control programs and the control data can be resolved quickly and surely.

The reprogramming like this may be performed in the following way. That is, rewrite data is distributed to each vehicle through a radio communication network from a control center run by a vehicle maker. At this time, the control center distributes a vehicle type code together with the rewrite data (rewrite data). On the other hand, the vehicle stores a vehicle type code of itself and verifies whether the received vehicle type code coincides with the vehicle type code stored in itself. If both of these vehicle type codes coincide with each other, the vehicle determines that the distributed rewrite data is for the vehicle and rewrites the control programs and the control data stored in itself based on the received rewrite data.

Depending on the rewriting or reprogramming of the control programs and the control data in this manner, the feeling of operating the vehicle can be changed. For this reason, when the reprogramming is performed without permission while the owner of the vehicle is not notified of performing the reprogramming, there is a possibility that an unexpected change in the feeling of operating the vehicle will cause uneasiness or doubt.

JP 11-27749A and JP 2000-207218A therefore propose to display a checking screen for inquiring whether the reprogramming is permitted on a vehicle-mounted display unit such as a navigation unit and of performing the reprogramming only when the reprogramming is permitted. In this case, through the display of the checking screen or the operation of permitting the reprogramming, the owner of the vehicle is notified in advance that the control programs and control data will be rewritten. As a result, even when the feeling of operating the vehicle is changed after the reprogramming, the owner does not feel distrust or uneasiness so much.

However, even if such a procedure of permitting the reprogramming is employed, there is a possibility that the reprogramming will be performed while a main user of the vehicle (usually, an owner of the vehicle) is not noticed of performing the reprogramming. For example, while the vehicle is separated from the owner, for example, because the owner lends the vehicle to an acquaintance or takes the vehicle to a dealer shop or a maintenance works for maintenance or inspection, the operation of permitting the reprogramming may be performed in some cases by a person other than the owner. In this case, when the person having performed the operation does not notify the owner of the operation, as a result, the reprogramming is performed while the owner is not notified of performing the reprogramming. Thus, this raises a possibility that when the vehicle is returned to the owner, an unexpected change will be caused in operating the vehicle. This will result in uneasiness or doubt.

It is therefore an object to provide a vehicle control device, which can more surely prevent a person having no permission from rewriting the data of the vehicle control device without permission, and a data rewriting system of the vehicle control device.

According to the present invention, a data rewriting system comprises a control center that distributes rewrite data through a radio communication network, and a vehicle control device that rewrites data stored therein based on the rewrite data distributed through the radio communication network.

In one aspect, the vehicle control device performs user identification check processing for checking whether a user is a privileged user designated as a vehicle user permitted to rewrite data, and permits and inhibits the user to rewrite the data on condition that the user is identified and not identified as the privileged user, respectively.

In another aspect, the vehicle control device receives vehicle type identification information, which is specific to each vehicle type and stored in a user item carried by the privileged user who is previously designated as the vehicle user permitted to rewrite the data, and checks whether the distributed data is for the vehicle by the received vehicle type identification information data.

The above and other objects, features and advantages of the present invention will become more apparent from the following detailed description made with reference to the accompanying drawings. In the drawings:
Fig. 1 is a block diagram schematically showing a data rewriting system of a vehicle control device according to a first embodiment of the present invention;
Fig. 2 is a block diagram schematically showing the vehicle control device of the first embodiment;
Fig. 3 is a flow chart showing a processing procedure relating to determination of rewriting data of the vehicle control device in the first embodiment;

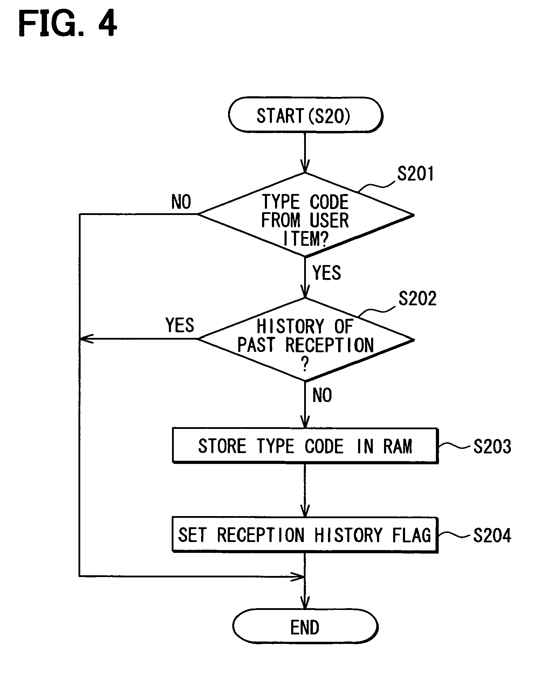

Fig. 4 is a flow chart showing a processing procedure of a RAM storage processing of a vehicle type code performed in the first embodiment;
Fig. 5 is a flow chart showing a processing procedure of a verification processing performed in the first embodiment;
Fig. 6 is a flow chart showing a processing procedure of a RAM storage processing of an ID code employed in the first embodiment;
Fig. 7 is a flow chart showing a processing procedure of a user identification check employed in the first embodiment;
Fig. 8 is a flow chart showing a processing procedure of a data rewriting processing performed in the first embodiment;
Fig. 9 is a block diagram schematically showing a data rewriting system of a vehicle control device according to a second embodiment of the present invention;
Fig. 10 is a flow chart showing a processing procedure relating to determination of rewriting data of the vehicle control device in the second embodiment;
Fig. 11 is a flow chart showing a processing procedure of a RAM storage processing of an ID code performed in the second embodiment;
Fig. 12 is a flow chart showing a processing procedure of a user identification check performed in the second embodiment;
Fig. 13 is a flow chart showing a processing procedure of a user identification check performed in a third embodiment of the present invention;
Fig. 14 is a flow chart showing a processing procedure of GUI display processing for manual input employed in a fourth embodiment of the present invention; and
Fig. 15 is a flow chart showing a processing procedure relating to an ID code change in a fifth embodiment of the present invention.

### (First Embodiment)

In a data rewriting system of a vehicle control device of the present invention, rewrite data is distributed to each vehicle through a radio communication network from a control center, so that reprogramming of the vehicle control device of each vehicle is performed. A user of a vehicle permitted to rewrite data in this manner is designated in advance for each vehicle. By the following constructions (A) and (B), a user other than the user permitted to perform the rewriting of data is prevented from performing the rewriting of data of the vehicle control device without permission. Here, the vehicle user permitted to perform the rewriting of data is referred to as "a privileged user". The main user of a vehicle (usually, owner of a vehicle) is designated as the privileged user.
(A) A vehicle type identification information showing the vehicle type of a user's vehicle is stored not in the vehicle itself but in an item carried by the privileged user (user item) when the privileged user rides on the vehicle. Determination whether the distributed rewrite data is for the user's vehicle is made by the use of vehicle type identification information acquired from the user item. That is, the user item in which the vehicle type identification information is stored is given only to the privileged user. If the privileged user is not in the state in which the user carries the user item, the privileged user cannot rewrite data. Here, in this embodiment, an intelligent key that is used as a main key of a vehicle and provides the functions of a keyless entry and the like is used as the user item.
(B) When the user performs the rewriting of data of the vehicle control device based on the distributed rewrite data, a user identification check to check whether the user is the privileged user is performed. The user is permitted to perform the rewriting of existing data (old data) with the rewrite data (new data) on the condition that the user is identified as the privileged user. That is, if the user is not identified as the privilege user in the user identification check, the user is prohibited from performing the rewriting of data based on the distributed rewrite data. Here, such a user identification check is performed by requesting the manual input of a user identification code (ID code) known only by the privileged user and by verifying whether the inputted user identification code coincides with an ID code previously stored in the vehicle. This ID code is previously stored in the vehicle control device and is notified to the privileged user. Thus, if a correct ID that coincides with the ID code stored in the vehicle control device is inputted, the person to input the ID code can be identified as the privileged user.

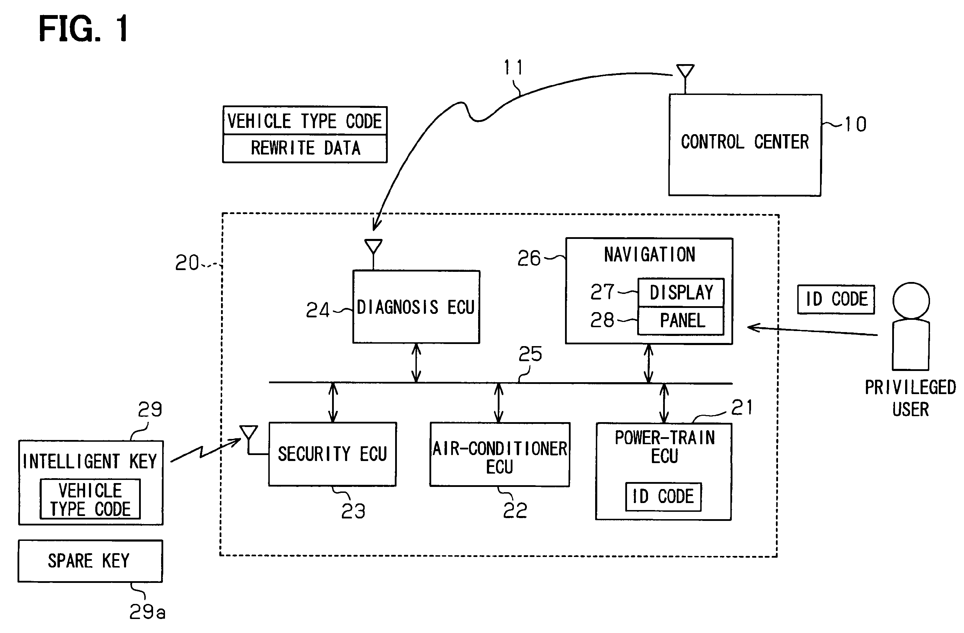

The first embodiment of the above data rewriting system is shown in Fig. 1. In this embodiment, a control center 10 is provided for distributing rewrite data to each vehicle 20, which is controlled through a radio communication network 11, as the core of the system. The radio communication line 11 may be a mobile phone line.

The vehicle control device of each vehicle 20 under control of the control center 10 is so constructed as to have plural electronic control units (ECU) including a power-train ECU 21 for controlling an engine and its power transmission system, an air-conditioner ECU 22 for controlling an air-conditioner in a vehicle compartment, a security ECU 23 for controlling the security function of locking/unlocking doors, and a vehicle-mounted master diagnosis ECU 24 for controlling the self-diagnosis function of the vehicle 20. The respective ECUs 21 to 24 are connected to each other through a communication network 25 in the vehicle.

The security ECU23 has the function of receiving a radio wave emitted from an intelligent key 29 as a main key of the vehicle 20. The intelligent key 29 has a vehicle type code specific to each vehicle type stored therein previously as vehicle type identification information. The information of this vehicle type is transmitted on a radio wave around the intelligent key 29. This intelligent key 29 is used normally only by the privileged user. Further, in addition to the intelligent key 20 having the vehicle type code stored therein, a spare key 29a having the vehicle type code not stored therein is prepared as the key of the vehicle 20, and a user other than the privileged user uses the spare key 29a when the user is in the vehicle. By the use of this spare key 29a, the doors can be locked/unlocked and an ignition switch can be turned on/off.

A navigation unit 26 for navigating the travel route of the vehicle 20 is connected to the communication network 25 in the vehicle 20. The navigation unit 26 has a display 27 for displaying various pieces of information and a touch panel 28 for operation instruction.

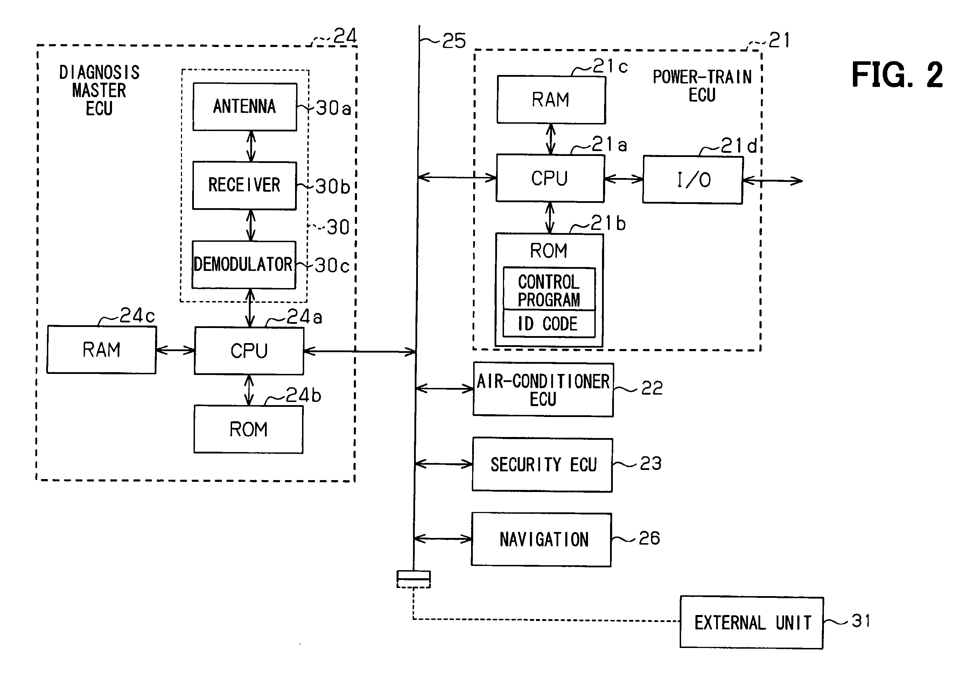

As shown in Fig. 2 more in detail, the power-train ECU 21 is so constructed as to have a central processing unit (CPU) 21a for performing processing relating to various control as a core unit. The CPU 21a has sections connected thereto, the sections including: a read only memory (ROM) 21b in which control programs and control data are stored; a random access memory (RAM) 21c in which data being processed is temporarily stored; and an input/output interface (I/O) 21d to which various kinds of sensors and actuators are connected. The ROM 21b may be a rewritable non-volatile memory such as an EEPROM or a flash memory, and holds its storage even when the power is shut off. On the other hand, the RAM 21c may be a volatile memory, and has its storage cleared when the power is shut off.

Although not shown, the air-conditioner ECU 22 also has a CPU, a ROM, a RAM, and an I/O, as in the case of the power-train ECI 21. Further, the security ECU 23 has a receiving section for receiving the radio wave from the intelligent key 29 as well as a CPU, a ROM, a RAM and an I/O. The vehicle-mounted diagnosis ECU 24 has a receiving section 30 including an antenna 30a, a receiver 30b, and a demodulator 30c as well as a CPU 24a, a ROM 24b and a RAM 24c, and receives data distributed from the control center 10.

Here, the ID code used for a user identification check is stored in the ROM 21b of the power-train ECU 21. The ID code for user identification is arbitrarily set by the privileged user himself when the privileged user buys the vehicle. A dealer or the like registers the set ID code in the ROM 21b of the power-train ECU 21 before delivering the vehicle through an external unit 31 connected to the communication network 25 in the vehicle. With this, the ID code known only by the privileged user is stored in the vehicle 20.

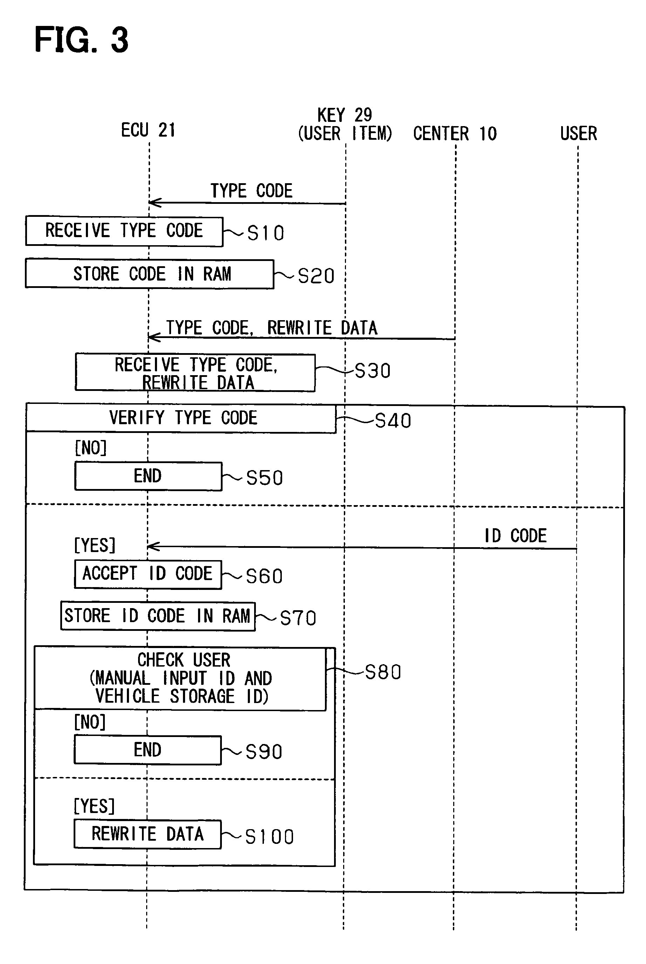

A series of processing relating to the determination of performing the rewriting of data through the radio communication network 11, that is, the remote reprogramming processing for the power-train ECU 21, is shown in Fig. 3. It is noted that the power-train ECU 21 is programmed to perform the processing of Fig. 3. Here, the remote reprogramming processing for the power-train ECU 21 will be described. The remote reprogramming processing for the other ECUs such as the air-conditioner ECU 22 and the security ECU 23 are also performed in the same manner.

After an ignition switch (not shown) is turned on, the power-train ECU 21 performs vehicle type code receiving processing S10 for receiving a vehicle type code from the intelligent key 29 of the user item. The power-train ECU 21 stores the received vehicle type code in the RAM 21c of itself by the RAM storage processing S20 of a vehicle type code.

When the control center 10 makes the power-train ECU 21 perform the rewriting of data of the vehicle control device, the control center 10 distributes the vehicle type code of the vehicle, the data of which is to be rewritten, together with the rewrite data to be rewritten to the power-train ECU 21 through the radio communication network 11. When the rewrite data is distributed to the power-train ECU 21 from the control center 10, the power-train ECU 21 performs the processing S30 of receiving the vehicle type code and the rewrite data.

When the power-train ECU 21 receives the vehicle type code and the rewrite data, the power-train ECU 21 performs verification processing S40 to check whether the rewrite data received this time is for the vehicle. The verification processing S40 is performed by verifying the vehicle type code received this time from the control center 10 and the vehicle type code stored in the RAM 21c by the RAM storage processing S20, and by checking whether both of these vehicle type codes coincide with each other. If both of the vehicle type codes do not coincide with each other [NO], the power-train ECU 21 determines that the rewrite data received this time is not for the vehicle and then performs an ending processing S50.

If both of the vehicle type codes coincide with each other, the power-train ECU 21 determines that the rewrite data received this time is for the vehicle. The power-train ECU 21 at this time performs an ID code acceptance processing S60 to accept an ID code manually inputted by the user and stores the ID code in the RAM 21c by a RAM storage processing S70 in the subsequent step. Then, the power-train ECU 21 performs a user identification check S80 based on the stored ID code.

The user identification check S80 is performed by verifying whether the ID code (manual input value) manually inputted by the user coincides with the ID code (vehicle storage value) stored in the ROM 21b of the power-train ECU 21. Here, if the manual input value and the vehicle storage value of the ID code do not coincide with each other [NO], the power-train ECU 21 determines that the user of the vehicle is not the privileged user permitted to rewrite data and performs an end processing S90. If the manual input value and the vehicle storage value of the ID code coincide with each other, the power-train ECU 21 determines that the user of the vehicle is the privileged user and performs data rewriting processing S100 for rewriting of data of the power-train ECU 21 based on the received rewrite data.

The RAM storage processing S20 of a vehicle type code is performed as shown in Fig. 3. This processing is performed repeatedly at periodic intervals as regular interrupt processing by the power-train ECU 21 after the ignition switch is turned on.

When this processing is started, first in S201, the power-train ECU 21 checks whether a vehicle type code is received from the control center 10. If the vehicle type code is not received (S201: NO), the power-train ECU 21 ends the processing this time without performing any more processing. If the vehicle type code is received (S201: YES), the power-train ECU 21 checks in the next S202 whether there is the history of past reception of the vehicle type code. Here, whether there is the history of past reception of the vehicle type code is checked by whether a vehicle type code reception history flag is set. Then, if there is the history of past reception of the vehicle type code (S202: YES), the power-train ECU 21 ends the processing this time without performing any more processing.

If there is not the history of past reception of the vehicle type code (S202: NO), the power-train ECU 21 stores in the S203 the received vehicle type code in the RAM 21c of itself. Then, the power-train ECU 21 sets the reception history flag of the vehicle type code in the next S204 and then ends the processing this time.

In this manner, in this RAM storage processing S20 of the vehicle type code, the vehicle type code is stored only once every time the ignition switch is turned on. Here, at this time, the vehicle type code is stored in the RAM 21c made of the volatile memory, so that every time the ignition switch is turned off, the vehicle type code is cleared.

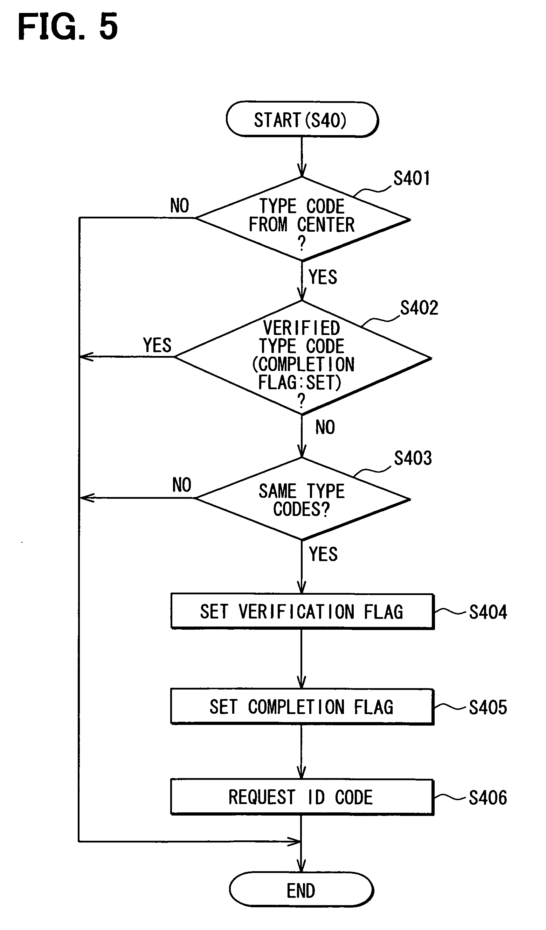

The verification processing S40 is performed as shown in Fig. 5. Also this processing is performed repeatedly at periodic intervals as regular interrupt processing by the power-train ECU 21.

When this processing is started, first in S401, the power-train ECU 21 checks whether the vehicle type code is received from the control center 10. Here, if it is not determined that the vehicle type code is received (S401: NO), the power-train ECU 21 ends the processing this time without doing any more processing. If it is determined that the vehicle type code is received (S401: YES), the power-train ECU 21 checks in the next S402 whether the verification of the vehicle type code has been completed. Whether the verification of the vehicle type code has been completed may be checked by whether a vehicle type code verification completion flag, which will be described later, is set.

Here, if the verification of the vehicle type code has been completed (S402: YES), the power-train ECU 21 ends the processing this time without doing any more processing. If the verification of the vehicle type code has not been completed (S402: NO), in the next S403, the power-train ECU 21 verifies whether the vehicle type code received this time from the control center 10 coincides with the vehicle type code stored in the RAM 21c by the RAM storage processing S20 of the vehicle type code, to check whether both of the vehicle type codes coincide with each other, that is, the same. Then, if both of the vehicle type codes do not coincide with each other (S403: NO), the power-train ECU 21 determines that the rewrite data received this time is not for this vehicle and hence ends the processing this time.

If both of the vehicle type codes coincide with each other (S403: YES), the power-train ECU 21 determines that the rewrite data received this time is for this vehicle. Then, in the next S404, the power-train ECU 21 sets a vehicle type code verification flag indicating code coincidence for showing that the rewrite data received this time is for this vehicle. Further, in the next S405, the power-train ECU 21 sets the vehicle code verification completion flag for showing that the verification of the vehicle type code is completed. Then, the power-train ECU 21 makes a request for inputting an ID code from a graphic user interface (GIU) in the next S406 and then ends this processing.

Here, when the power-train ECU 21 makes the request for inputting an ID code from a GUI, a GUI for manually inputting an ID code is displayed on a display 27 of the navigation unit 26. In this GUI, the ID code can be manually inputted by operating the touch panel 28 of the navigation unit 26. After this GUI is displayed, the power-train ECU 21 performs the ID code acceptance processing S60 for accepting the ID code manually inputted and the RAM storage processing S70 for storing the ID code.

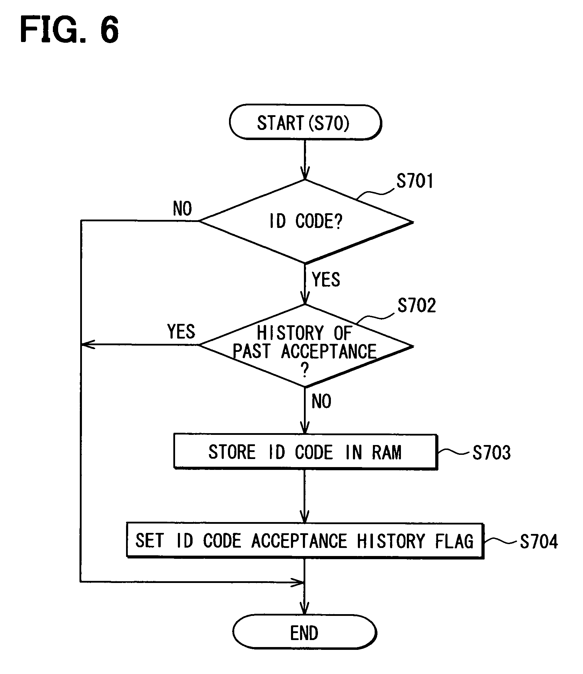

The RAM storage processing S70 of the ID code is performed as shown in Fig. 6. Also this processing is performed repeatedly at periodic intervals as regular interrupt processing by the power-train ECU 21.

When this processing is started, first in S701, the power-train ECU 21 checks whether an ID code is inputted in the GUI for manually inputting an ID code. Here, if the ID code is not yet inputted (S701: NO), the power-train ECU 21 ends the processing this time without performing any more processing. If the ID code has already been inputted (S701: YES), in the next S702, the power-train ECU 21 checks whether there is the history of acceptance of the ID code manually inputted. This check is performed by whether an ID code acceptance history flag, which will be described later, is set. Here, if there is the history of past acceptance of the ID code (S702: YES), the power-train ECU 21 ends the processing this time without performing any more processing.

If there is not the history of past acceptance of the ID code (S702: NO), in the next S703, the power-train ECU 21 stores, in the RAM 21c of itself, the ID code manually inputted in the GUI for manually inputting the ID code, that is, the manually inputted value of the ID code. Then, the power-train ECU 21 sets in the next S704 the ID code acceptance history flag for showing that the storing of the ID code manually inputted is completed and then ends this processing.

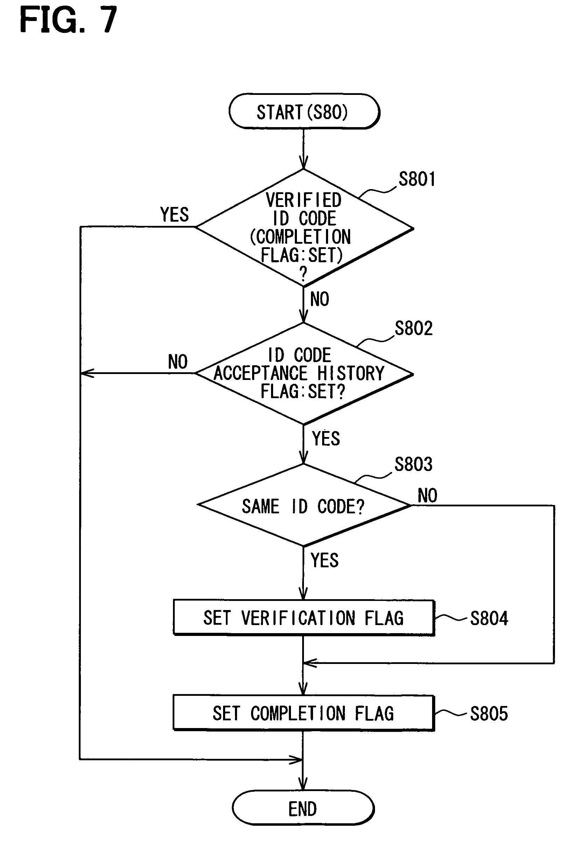

The user identification check processing S80 is performed as shown in Fig. 7. Also this processing is performed repeatedly at periodic intervals as regular interrupt processing by the power-train ECU 21.

When this processing is started, first in S801, the power-train ECU 21 checks whether a user identification check, that is, user verification, has been completed. This check may be performed based on whether a user identification completion flag, which will be described later, is set. Here, if the user identification completion has been already completed (S801: YES), the power-train ECU 21 ends the processing this time without performing any more processing.

If the user identification check has not yet been completed (S801: NO), in the next S802, the power-train ECU 21 checks whether the ID code acceptance history flag is set. If the ID code acceptance history flag has not been set yet (S802: NO), the power-train ECU 21 ends the processing this time without performing any more processing. If the ID code acceptance history flag has been set (S802: YES), that is, if the storing of the manually inputted ID code in the RAM 21c has been completed in the ID code acceptance processing S60, the power-train ECU 21 verifies whether the ID code (manual input value) stored in the RAM 21c coincides with the ID code (vehicle storage value) previously stored in the ROM 21b.

If both of the ID codes coincide with each other, that is, same ID code (S803: YES), the power-train ECU 21 determines that the user is the privileged user permitted to rewrite data and sets in S804 an ID code verification flag indicating that the user is identified as the privileged user. Then, the power-train ECU 21 sets in the next S805 a user identification completion flag indicating that the user identification check is completed and then ends this processing. If both of the ID codes do not coincide with each other (S803: NO), the power-train ECU 21 determines that the user is not the privileged user permitted to rewrite data. At this time, the power-train ECU 21 sets the user identification completion flag in the next S805 and then ends this processing.

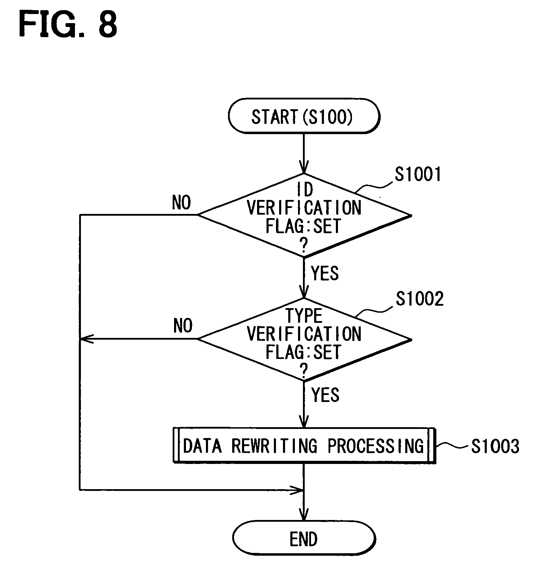

The data rewriting processing S100 is performed as shown in Fig. 8. Also this processing is performed repeatedly at periodic intervals as regular interrupt processing by the power-train ECU 21.

When this routine is started, first in S1001, the power-train ECU 21 checks whether the ID code verification flag is set, that is, whether the user is verified as the privileged user in the user identification check S80. Further, in the next S1002, the power-train ECU 21 checks whether the above vehicle type code verification flag is set, that is, whether the rewrite data received in the verification processing S40 is for this vehicle.

Here, if the determination result in any one of the above determinations is negative (S1001: NO or S1002: NO), the power-train ECU 21 ends this processing without performing any more processing. On the other hand, if the determination results in both of the above determinations are affirmative (S1001: YES or S1002: YES), in S1003, the power-train ECU 21 rewrites or updates data based on the rewrite data received from the control center 10 and updates the control program and the control data stored in the ROM 21b of itself.

According to the vehicle control device of this embodiment and its data rewriting system, the following advantages can be provided.
(1) The vehicle type code of the vehicle type identification information is acquired from the intelligent key 29 of the user item carried by the privileged user when the privileged user uses the vehicle, and it is checked by the use of the acquired vehicle type code whether the rewrite data distributed from the control center 10 is for the vehicle. For this reason, the procedure of rewriting data cannot be advanced except when the privileged user uses the vehicle with the intelligent key 29. Thus, it is possible to prevent an unauthorized or non-privileged person other than the privileged user permitted to rewrite data from rewriting the data of the vehicle control device without permission.
(2) The ID code known only by the privileged user is previously set and stored in the vehicle 20. Whether the ID code previously stored in the vehicle 20 coincides with the ID code manually inputted by the user is checked and verified, whereby the user identification check whether the user is the privileged user is performed. If the user is identified as the privileged user in the user identification check, the user is permitted to rewrite the data of the vehicle control device. When the user is not identified as the privileged user in the user identification check, the user is prohibited from rewriting the data of the vehicle control device. For this reason, it is possible to prevent a person other than the privileged user permitted to rewrite data from rewriting the data of the vehicle control device without permission.

### (Second Embodiment)

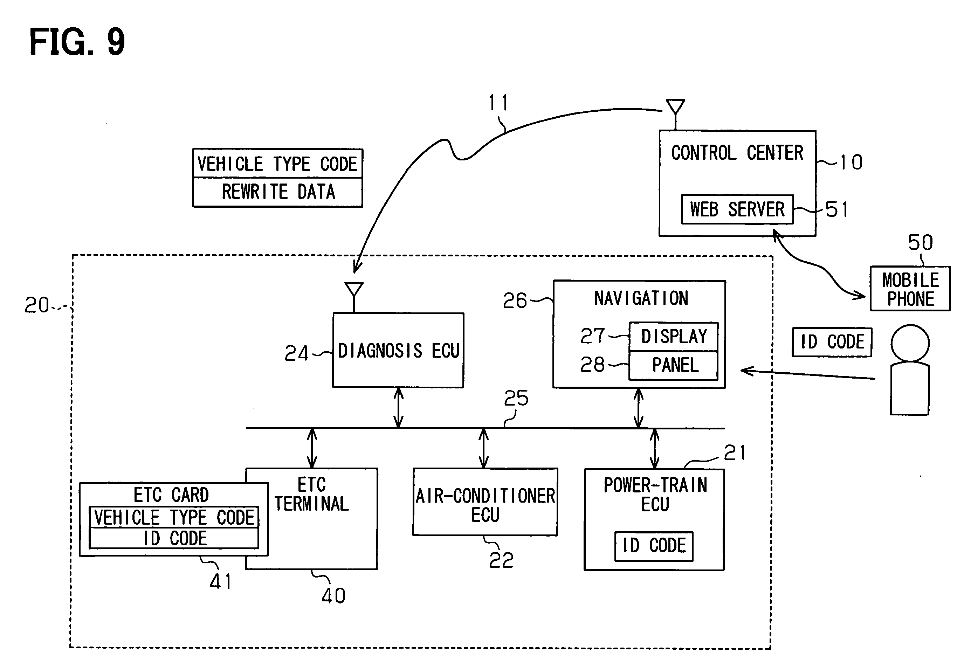

In the first embodiment, the intelligent key 29 is employed as the user item in which the vehicle type code is stored, and it is determined by the use of the vehicle type code acquired from the intelligent key 29 whether the data for rewriting distributed from the control center 10 is for the vehicle. However, as for the user item in which the vehicle type code is stored, an arbitrary item can be employed in place of the intelligent key 29 if the arbitrary item is the one that can be thought to be carried by the user with high frequency when the user uses the vehicle. Thus, in the second embodiment, an electronic toll collection system (ETC) card is employed as the user item as shown in Fig. 9. Further, other items such as a key holder, a mobile phone, and a driver's license and its case may also be employed as the user item.

Further, in the first embodiment, whether the ID code manually inputted by the user coincides with the ID code stored in the vehicle 20 is verified to perform the user identification check of whether the user is the privileged user, and it is determined according to the check result whether the user should be permitted to rewrite the data of the vehicle control device or prohibited from rewriting the data. In the second embodiment shown in Fig. 9, in order to perform such a user identification check more strictly, the verification of the ID code by the use of the user item is added to the user identification check. Specifically, the ID code is previously stored also in the user item carried by the privileged user when the privilege user uses the vehicle, and the user identification check is performed by verifying three kinds of ID codes, that is, the ID code acquired from the user item (user item (UI) acquisition value), the ID code manually inputted by the user (manual input value), and the ID code stored in the vehicle 20 (vehicle storage value).

The second embodiment is configured similarly to the first embodiment. However, as shown in Fig. 9, a vehicle-mounted ETC terminal 40 is disposed in the vehicle 20, in which the data of the vehicle control device is rewritten through the radio communication network 11. The ETC terminal 40 is connected to the power-train ECU 21, the air-conditioner ECU 22, the vehicle-mounted master diagnosis ECU 24, and the navigation unit 26 through the vehicle communication network 25 in the vehicle. Also, not only the control programs but also the ID code to be used for the user identification check is pre-stored in the ROM 21b of the power-train ECU 21.

The vehicle type code of the vehicle type information and the ID code used for the user identification check are pre-stored in an ETC card 41, which is insertable into the ETC terminal 40. When the ETC card 41 having the vehicle type and the ID code stored therein is inserted into the ETC terminal 40, the ETC terminal 40 reads the vehicle type and the ID code and transmits them to the vehicle control device. The vehicle control device checks by the use of the vehicle type code acquired from the ETC card 41 whether the rewrite data distributed from the control center 10 is for the vehicle and performs the user identification check by the use of the ID code similarly acquired from the ETC card 41.

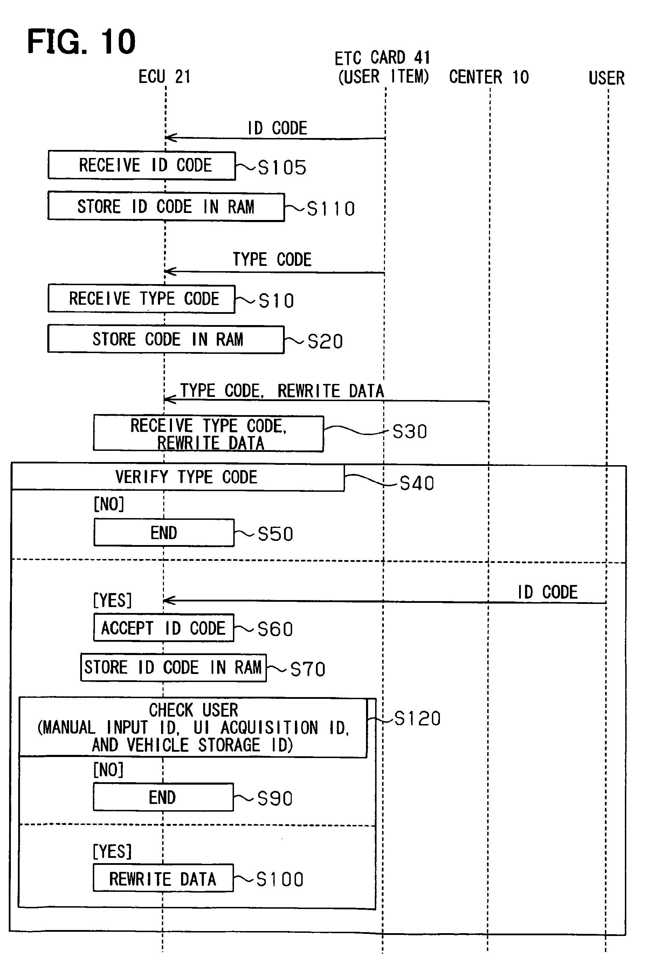

The power-train ECU 21 performs a series of processing relating to the determination of rewriting of data through the radio communication network 11 as shown in Fig. 10. Here, the processing relating to remote reprogramming in the case of the power-train ECU 21 will be described, but the processing relating to the remote reprogramming in the case of the other ECUs such as the air-conditioner ECU 22 may also be performed in the same manner.

After the ignition switch is turned on by the user to use the vehicle 20, the power-train ECU 21 performs ID code receiving processing S105 for acquiring an ID code from the ETC card 41 of the user item. The power-train ECU 21 stores the received ID code (UI acquisition value) in the RAM 21c of itself by RAM storage processing S110 of storing an ID code. Subsequently, the power-train ECU 21 performs this time the vehicle type code reception processing S10 for receiving the vehicle type code from the ETC card 41 and stores the received vehicle type code in the RAM 21c of itself by the RAM storage processing S20 of storing a vehicle type code.

Thereafter, when the rewrite data for reprogramming is distributed from the control center 10 together with the vehicle type code of the vehicle to be reprogrammed, the power-train ECU 21 performs the reception processing S30 of receiving the vehicle type code and the rewrite data which have been distributed. Subsequently, the power-train ECU 21 performs the verification processing S40 to check whether the rewrite data received this time from the control center 10 is for this vehicle. This verification processing S40 is performed by verifying whether the vehicle type code received this time from the control center 10 coincides with the vehicle type code stored in the RAM 21c by the RAM storage processing S20 and by checking whether both of the vehicle type codes coincide with each other Here, if both of the vehicle type codes do not coincide with each other, the power-train ECU 21 determines that the rewrite data received this time is not for this vehicle and ends the processing this time.

On the other hand, if both of these vehicle type codes coincide with each other, the power-train ECU 21 determines that the rewrite data received this time is for this vehicle. Then, the power-train ECU 21 performs the ID code acceptance processing S60 to accept an ID code manually inputted by the user and stores the ID code in the RAM 21c by the RAM storage processing S70. Here, the power-train ECU 21 verifies whether the manually inputted ID code (manual input value) and the ID code (UI acquisition value) acquired from the ETC card 41 and stored in the RAM 21c by the RAM storage processing S110 coincide with the ID code (vehicle storage value) previously stored in the ROM 21b of the power-train ECU 21, thereby performing the user identification check S120.

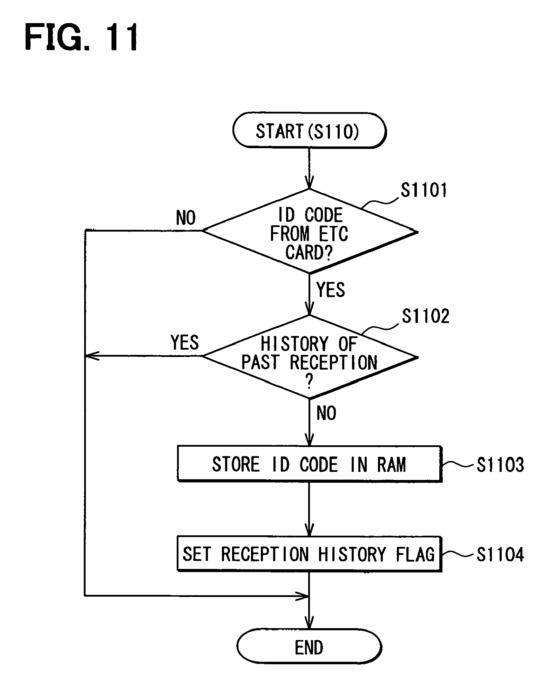

If these three ID codes do not coincide one another in the user identification check S120, the power-train ECU 21 determines that the user of the vehicle is not the privileged user permitted to rewrite data and performs the end processing S90 to finish the processing this time. On the other hand, if the three ID codes coincide one another, the power-train ECU 21 determines that the user of the vehicle is the privileged user and performs the data rewriting processing S100 for rewriting the data of the power-train ECU 21 based on the received rewrite data. The RAM storage processing S110 of a vehicle type code is performed as shown in Fig. 11. This processing is performed repeatedly at periodic intervals as regular interrupt processing by the power-train ECU 21.

When this processing is started, first in S1101, the power-train ECU 21 checks whether the power-train ECU 21 receives the vehicle type code stored in the ETC card 41. As described above, when the ETC card 41 storing an ID code is inserted into the ETC terminal 40, the ETC terminal 40 reads the ID code from the ETC card 41 and transmits the ID code to the vehicle control device. Here, the power-train ECU 21 checks whether the power-train ECU 21 receives the ID code distributed in this manner. If it is not determined that the power-train ECU 21 has received the ID code (S1101: NO), the power-train ECU 21 ends the processing this time without performing any more processing.

On the other hand, if it is determined that the power-train ECU 21 has received the ID code (S1101: YES), the power-train ECU 21 checks in the next S1102 whether there is the history of past reception of the ID code. Here, this check is performed by whether an ID code reception history flag is set. Then, if there is the history of past reception of the vehicle type code (S1102: YES), that is, the ID code reception history flag is set, the power-train ECU 21 ends the processing this time without performing any more processing. If there is not the history of reception of the ID code (S1102: NO), that is, when the ID code stored in the ETC card 41 is first received in this vehicle trip, the power-train ECU 21 stores in S1103 the received ID code (UI acquisition value) in the RAM 21c of itself. Then, the power-train ECU 21 sets the ID code reception history flag and then ends this processing.

In this manner, in this RAM storage processing S110 of the ID code, the ID code (UI acquisition value) received from the ETC card 41 is stored only once for each trip. Here, the ID code (UI acquisition value) is stored in the RAM 21c made of the volatile memory, so that every time the ignition switch is turned off, the ID code (UI acquisition value) is cleared.

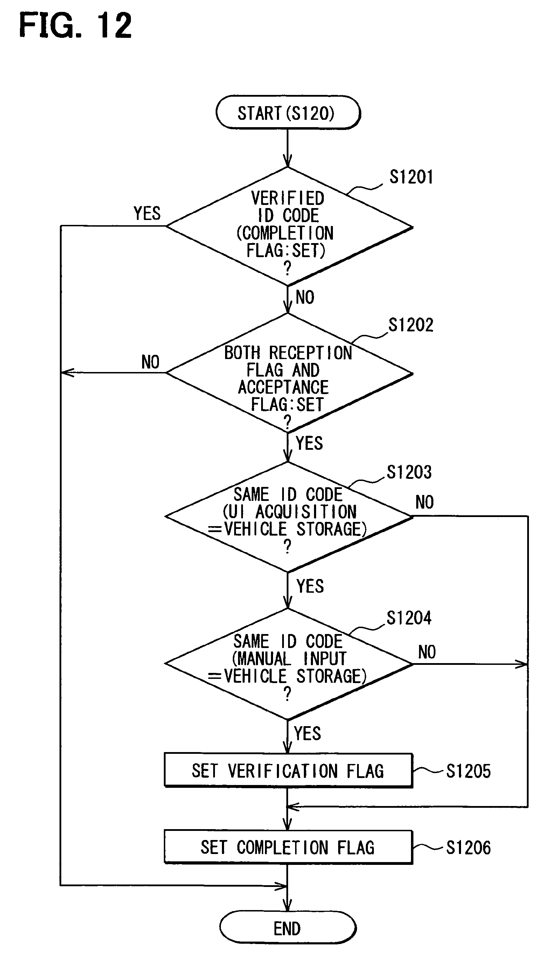

The user identification check processing S120 is performed as shown in Fig. 12. Also this processing is performed repeatedly at periodic intervals as regular interrupt processing by the power-train ECU 21.

When this processing is started, first in S1201, the power-train ECU 21 verifies the user by checking whether the user identification check has been completed. This check is performed by whether the identification check completion flag showing that the user identification check is completed is in a set state. Here, if the identification check completion flag is set, that is, the user identification check has been completed (S1201: YES), the power-train ECU 21 ends the processing this time without doing any more processing.

If the identification check has not been completed (S1201: NO), the power-train ECU 21 checks in the next S1202 whether both of the ID code reception history flag and the ID code acceptance history flag are set. Here, if at least one of the ID code reception history flag and the ID code acceptance history flag is not set (S1202: NO), that is, one of or both of the reception of the ID code stored in the ETC card 41 and the manual input of the ID code has not yet been completed, the power-train ECU 21 ends the processing this time without doing any more processing.

If both of the ID code reception history flag and the ID code acceptance history flag are set (S1202: YES), in the next S1203, the power-train ECU 21 checks whether the ID code acquired from the ETC card 41 (UI acquisition value, which is stored in the RAM 21c by the RAM storage processing S110 of the ID code) coincides with the ID code stored in the ROM 21b (vehicle storage value). Further, in the next S104, the power-train ECU 21 checks whether the ID code manually inputted by the user (manual input value, which is stored in the ROM 21b by the ID code acceptance processing S60) coincides with the ID code stored in the ROM 21b (vehicle storage value).

Here, if a determination result in any one of the above determinations is negative (S1203: NO or S1204: NO), it is determined that the user is not the privileged user. In this case, the power-train ECU 21 sets the identification check completion flag in S1206 and ends this processing.

On the other hand, the determination results of the two checks at S1203 and S1204 are affirmative (S1203: YES and S1204: YES), it is determined that the user of the vehicle is the privileged user permitted to rewrite data. In this case, in S1205, the power-train ECU 21 sets the ID code verification flag for showing that the user is identified as the privileged user and, further in S1206, sets the identification check completion flag and ends this processing.

As described above, in the data rewriting processing S100 (Fig. 8), the power-train ECU 21 rewrites the data of the vehicle control device based on the rewrite data distributed from the control center 10 on the condition that the ID code verification flag is set. Thus, , when the ID code manually inputted by the user (manual input value), the ID code acquired from the ETC card 41 of the user item (UI acquisition value), and the ID code previously stored in the vehicle 20 (vehicle storage value) coincide with each other, the user is identified as the privileged user and is permitted to rewrite data.

According to the vehicle control system and its data rewriting system of this embodiment, in addition to the above advantages (1) and (2), the following advantages can be produced.

(3) The user identification check for checking whether the user is the privileged user is performed by the use of not only the ID code manually inputted by the user but also the ID code acquired from the ETC card 41. For this reason, when the user rewrites the data of the vehicle control device, the user needs not only to manually input a proper ID code but also to ride on the vehicle with the ETC card 41 having the ID code stored therein, so that the user identification check can be performed more strictly.

### (Third Embodiment)

In the second embodiment, when the ID code manually inputted by the user (manual input value), the ID code acquired from the ETC card 41 of the user item (UI acquisition value), and the ID code previously stored in the vehicle 20 (vehicle storage value) coincide one another, the user is identified as the privileged user. That is, only one ID code is stored in the vehicle 20 and, by the use of this single ID code, verification of both of the ID code manually inputted (manual input value) and the ID code acquired from the user item (UI acquisition value) is performed. In this case, if a person deciphers the data stored in the user item to illegally acquire the ID code stored in the user item, the person comes to know the ID code to be manually inputted.

In order to prevent such a person from rewriting data without permission by the use of the ID code illegally acquired in this manner, it is preferred to set the ID code to be manually inputted and the ID code stored in the user item to different values. That is, two different ID codes, one of which is used for verifying the manually inputted ID code and the other of which is used for verifying the ID code acquired from the user item, are stored in the vehicle 20, and both of the ID codes are separately verified to perform the user identification check. In this case, when the person is identified as the privileged user, the person is required to have two different ID codes. Even if the person illegally acquires any one of the two different ID codes, if the person does not know another ID code, the person is not permitted to rewrite data. For example, even if the person deciphers the data stored in the user item and illegally acquires the ID code stored in the user item, the person cannot rewrite data without permission only by the acquired ID code because the person cannot know the ID code to be manually inputted.

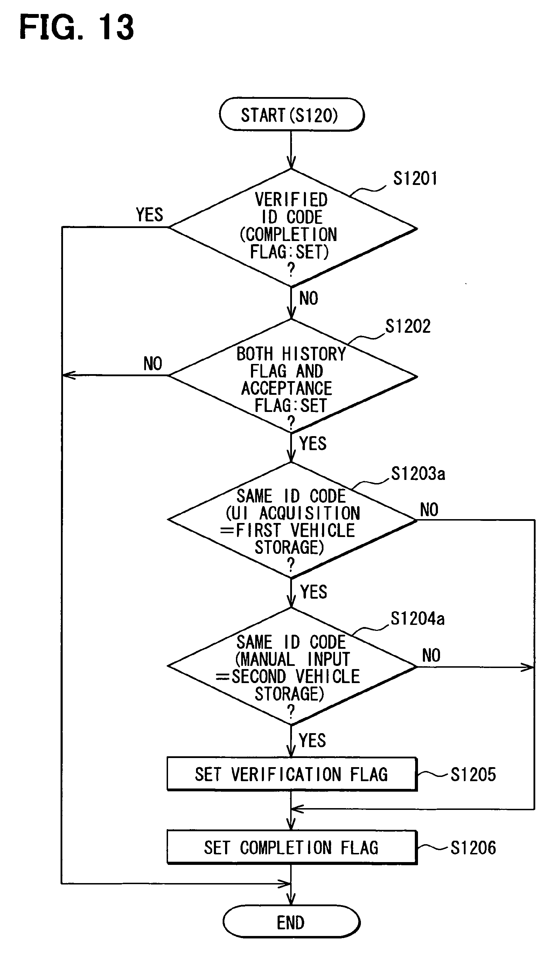

One example of the user identification check in the third embodiment is shown in Fig. 13, which may be performed in place of the user identification check S120 shown in Fig. 12. Also in this case, as in the case of Fig. 12, after the processing is started, it is checked whether the user identification check has been completed (S1201). It is checked further checked whether both of the ID code reception history flag and the ID code acceptance history flag are set (S1202). If the check results are negative and affirmative (S1201: NO and S1202: YES), respectively, the ID codes are verified.

Then, in S1203a, it is determined whether the ID code acquired from the ETC card 41 (UI acquisition value, which is stored in the RAM 21c by the RAM storage processing S110 of the ID code) coincides with a first ID code stored in the vehicle 20 (ROM 21b) (first vehicle storage value). Further, it is determined in the next S1204a whether the ID code manually inputted by the user (manual input value, which is stored in the RAM 21c by the ID code acceptance processing S60) coincides with a second ID code stored in the vehicle 20 (ROM 21b) (second vehicle storage value). This second ID code (second vehicle storage value) is set to a value different from the first ID code (first vehicle storage value) to be verified whether it coincides with the ID code acquired from the ETC card 41 (that is, first vehicle storage value ≠ second vehicle storage value). Also in this case, only when both of the check results in the above two checks are affirmative (S1203a: YES and S1204a: YES), the user of the vehicle is identified as the privileged user permitted to rewrite data, and the ID verification flag is set in S1205.

### (Fourth Embodiment)

In the above respective embodiments, if it is determined in the verification processing S40 (Fig. 5) that the distributed rewrite data is for this vehicle (S403: YES), the GUI for manually inputting the ID code is displayed on the display 27 of the navigation unit 26 (S406). In the fourth embodiment, the displaying of this GUI is permitted only when the user gets in the vehicle by the use of the main key 29. That is, when the user gets in the vehicle by the use of a key (spare key) 29a other than the main key 29, the user is prohibited from manually inputting the ID code. In this case, even if a person can know the ID code to be manually inputted, if the person does not have the main key, the person cannot advance the procedure of rewriting data. Thus, this can make it more difficult to rewrite data illegally.

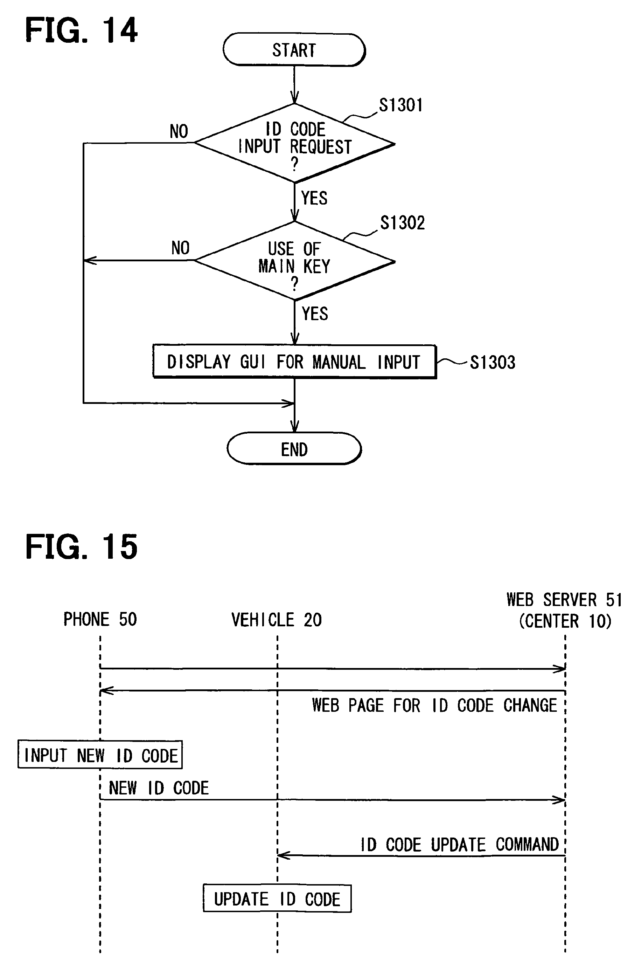

The navigation unit 26 performs processing of displaying a GUI for manually inputting the ID code as shown in Fig. 14. This processing is performed repeatedly at regular intervals by the navigation unit 26.

When this routine is started, the navigation unit 26 checks in S1301 whether there is a request for inputting an ID code from the vehicle control device. Here, if there is the request for inputting an ID code (S1301; YES), the navigation unit 26 checks in the next S1302 whether the user rides on the vehicle by the use of the main key. That is, it is checked whether this operation of turning on the ignition key is performed by the use of the main key 29 or is performed by the use of the spare key 29a. If it is determined that this operation is performed by the use of the main key (S1302: YES), the navigation unit 26 displays the GUI for manually inputting the ID code on the display 27 (S1303).

Further, the displaying of the GUI for manually inputting the ID code may be permitted only when the ID code stored in the user item is acquired. Also in this case, the procedure of rewriting data cannot be advanced without holding the user item, which can make it more difficult to rewrite data illegally.

### (Fifth Embodiment)

In the above respective embodiments, if the user does not pass the user identification check by the verification of the ID code, the user cannot rewrite the data of the vehicle control device. Thus, this can prevent an unauthorized user from rewriting data without permission. However, even in such a case, if a user other than the privileged user acquires the ID code illegally, the user can rewrite data without permission. To prevent the user from rewriting data by the use of the ID code illegally acquired, it is effective to change the ID code regularly or at appropriate timing. Thus, a method by which the privileged user can arbitrarily change the ID code will be proposed here.

An example of the procedure of the processing of changing the ID code is shown in Fig. 15. This example shows as the fifth embodiment the procedure when the privileged user changes the ID code stored in the vehicle 20 by the use of a mobile phone 50.

In this embodiment, a Web server 51 (Fig. 9) is provided in the control center 10. When the privileged user accesses this Web server 51 from the user's mobile phone 50, the Web server 51 returns a Web page for changing the ID code to the mobile phone 50. When the privileged user inputs a new ID code to the Web page displayed on the mobile phone 50, the new ID code is transmitted to the Web server 51. The Web server 51 informs the control center 10 of the received new ID code and the control center 10 gives the concerned vehicle 20 a command to update the ID code to the new ID code through the radio communication network 11. The vehicle 20 having received this command updates the ID code by replacing the ID code stored in the vehicle control device with the new ID code based on the command.

In this embodiment, the ID code stored in the vehicle 20 can be set and updated by the command through the radio communication network 11 from the control center 10. However, the system can be also constructed in such a way that the ID code may be set and changed by the use of an interface mounted in the vehicle 20, for example, the navigation unit 26. In either case, when the vehicle control device employs such a system configuration, the privileged user can arbitrarily set and change the ID code stored in the vehicle 20, and further the ID to be inputted in the user identification check processing S80, S120.

Although only the privileged user is permitted to control the ID code by himself, there is also a case in which the control center 10 should also be permitted to control the ID code. In this case, the control center 10 makes the vehicle 20 forcibly set or change the ID code stored in the vehicle 20 through the radio communication network 11 and notifies the privileged user of the set or changed ID code by the use of communication means, for example, electronic mail.

Further, it may be preferred that the ID code stored in the vehicle 20 is changed at regular intervals. In this case, an effective period is pre-set for the ID code. Every time the effective period passes, the ID code is forcibly changed by the control center 10. Alternatively, after the effective period passes, the ID code is made ineffective and rewriting data cannot be performed if a new ID code is not registered. Here, in the case in which the control of the ID code is left to the privileged user, it is also preferred for the privileged user to arbitrarily set the effective period of the ID code.

Still further, it may also be preferred that the ID code stored in the vehicle 20 is updated every time the data of the vehicle control device is rewritten. In this case, the ID code is stored in a storage region in which data is to be rewritten, for example, in the ROM 21b of the power-train ECU 21. When the control program and the control data are rewritten, the ID code is also rewritten at the same time. In this case, the ID code can be made effective only for one rewriting of data. That is, the ID code once used for the user identification check cannot be used for the next rewriting of data.

In contrast to this, the ID code stored in the vehicle 20 may be desired to be held also at the time of rewriting data. In the case in which the ID code is desired to be surely held in this manner, it is recommendable to store the ID code in a storage region, in which data cannot be rewritten by rewriting data, of the storage region of the vehicle control device. For example, the vehicle-mounted master diagnosis ECU 24 has a storage region for storing the results of a vehicle self-diagnosis, and this storage region is a region in which data cannot be rewritten. Thus, when the ID code is stored in this storage region, the ID code can be held even after data is rewritten.

### (Sixth Embodiment)

In this sixth embodiment, a method for more strictly performing the user identification check in the above respective embodiments is implemented. The user identification checks in the above embodiments are performed only by the verification of the ID code. The user identification check can be more strictly performed by adding a user identification method other than the verification of the ID code. The following two methods may be implemented as the user identification method other than the verification of the ID code.

### (A) User identification by biometric identity verification

The biometric identity verification is a method for identifying an individual person by the use of biometric information different among individual persons such as a finger print pattern and a retina pattern. For example, a device for reading a finger print pattern is disposed in the vehicle 20, and it is checked whether a finger print pattern of a user, which is read by the device, coincides with the finger print pattern of the privileged user, which has been pre-registered. With this, whether the user is the privileged user can be checked by whether both of these finger print patterns coincide with each other. Thus, if not only the condition that the user passes the verification of the ID code but also the identification of the user based on the biometric identity verification like this is added to the condition of identifying the user as the privileged user in the user identification check, the user identification check can performed more strictly.

### (B) User identification using vehicle identification information of ETC

In the above second embodiment, by storing the ID code in the ETC card 41 (Fig. 9), the ETC card 41 may be used as the user item used for identifying the privileged user in the user identification check. However, the ETC card 41 essentially stores vehicle identification information specific to the vehicle and hence the user identification check can be performed by the use of this information. Even if the ID code is not stored in the ETC card 41, whether the user is the privileged user can be checked by whether the vehicle identification information read from the ETC card 41 coincides with those of the vehicle. For this reason, the user identification check can be performed more strictly also by adding not only the verification of the ID card but also the coincidence of the vehicle identification information held by the electronic toll collection system (ETC card 41) with those of the vehicle to the condition of the identification that the user is identified as the privileged user in the user identification check.

### (Other Embodiments)

The above respective embodiments can be modified in the following manner.

In the second embodiment, the user identification check processing S120 is performed by the use of both of the ID code manually inputted by the user and the ID code acquired from the user item. When the processing is required to be simplified, of these ID codes, only the ID code acquired from the user item can be used for performing the user identification check processing. In this case, the user identification check processing S120 shown in Fig. 1 may be performed by omitting the processing of S1204.

In the above respective embodiments, the checking of whether the user is the privileged user is performed by the verification of the ID code. However, an identification method other than the verification of the ID code may be employed if it can be checked by the identification method whether the user is the privileged user permitted to rewrite data. That is, the privileged user permitted to rewrite data may be pre-specified and then the user identification check is performed. If a user is not identified as the privileged user in the user identification check processing, the user cannot rewrite data. With this, it is possible to prevent the user from rewriting data without permission.

In the above respective embodiments, both of the following (A) and (B) are performed. However, in the case of simplifying the processing, only one of the following (A) and (B) may be performed. Even in the case of employing the following (A), if the user does not get in the vehicle with the user item, the user cannot advance the procedure of rewriting data. Further, even in the case of employing only the following (B), if the user is not identified as the privileged user in the user identification check processing, the user cannot rewrite data. For this reason, even in the case of singly employing one of the following (A) and (B), it is possible to prevent the user from rewriting data without permission.
(A) The vehicle identification information (vehicle type code) is stored in an item (user item) carried by the privileged user when the privileged user gets in the vehicle, and whether the distributed rewrite data is for this vehicle is checked by the use of the vehicle type information acquired from the user item.
(B) When a user makes a request for permission to rewrite the data of the vehicle control device based on the distributed rewrite data, the user identification check for checking whether the user is the privileged user is performed. If the user is not identified as the privileged user, the user is not permitted to rewrite the data.

## Claims

1. A vehicle control device for rewriting data stored therein based on rewrite data distributed through a radio communication network (11), the vehicle control device comprising:
a user check means (S80, S120) that performs user identification check processing for checking whether a user is a privileged user designated as a vehicle user permitted to rewrite the data; and
a prohibition means (S90) that prohibits the user from rewriting the data when the user is not identified as the privileged user.

2. A vehicle control device for rewriting data stored therein based on rewrite data distributed through a radio communication network (11), the vehicle control device comprising:
a user check means (S80, S120) that performs user identification check processing for checking whether a user is a privileged user designated as a vehicle user permitted to rewrite data; and
a permission means (S100) that permits the user to rewrite the data on condition that the user is identified as the privileged user.

3. The vehicle control device according to claim 2, wherein:
a user identification code is set individually for the privileged user of each vehicle and stored in the vehicle, the user identification code being also stored in a user item (29, 41) which is carried by the privileged user when the privileged user uses the vehicle; and
the user check means (S80, S120) performs the user identification check by verifying whether the user identification code stored in the vehicle coincides with the user identification code acquired from the user item.

4. The vehicle control device according to claim 2, wherein:
a user identification code is set individually for the privileged user of each vehicle and stored in the vehicle; and
the user check means (S80, S120) performs the user identification check by verifying whether the user identification code stored in the vehicle coincides with a user identification code manually inputted by the user.

5. The vehicle control device according to claim 2, wherein:
a user identification code is set individually for the privileged user of each vehicle and stored in the vehicle, the user identification code being also stored in a user item (29, 41) which is carried by the privileged user when the privileged user uses the vehicle; and
the user check means (S80, S120) performs the user identification check by verifying whether the user identification code stored in the vehicle coincides with the user identification code acquired from the user item and a user identification code manually inputted by the user.

6. The vehicle control device according to claim 5, wherein:
two different user identification codes are stored in the vehicle and are used for verifying whether the user identification code acquired from the user item and the user identification code manually inputted by the user, respectively.

7. The vehicle control device according to any one of claims 3, 5 and 6, wherein:
the user identification code acquired from the user item and stored is cleared every time an ignition switch is turned off.

8. The vehicle control device according to any one of claims 4 to 6, wherein:
the user is permitted to manually input the user identification code, only when the user uses the vehicle by the use of a main key (29).

9. The vehicle control device according to claim 5 or 6, wherein:
the user is permitted to manually input the user identification code, only when the user acquires a user identification code stored in a user item carried by the privileged user when the privileged user uses the vehicle.

10. The vehicle control device according to any one of claims 3 to 6, wherein:
the user identification code stored in the vehicle is rewritten, when the data is rewritten.

11. The vehicle control device according to any one of claims 3 to 6, wherein:
the user identification code stored in the vehicle is stored in a storage region not to be rewritten by rewriting the data.

12. The vehicle control device according to any one of claims 3 to 6, wherein:
the user identification code stored in the vehicle is changeable by a command distributed through the radio communication network.

13. The vehicle control device according to any one of claims 3 to 6, wherein:
the user identification code stored in the vehicle is changeable by a mobile phone (50).

14. The vehicle control device according to any one of claims 3 to 6, wherein:
the user identification code stored in the vehicle is changeable by an interface (26) mounted in the vehicle.

15. The vehicle control device according to any one of claims 3 to 6, wherein:
the user identification code stored in the vehicle is changeable every time a pre-set effective period passes.

16. The vehicle control device according to any one of claims 3 to 6, wherein:
the user identification code stored in the vehicle is made ineffective when a pre-set effective period passes.

17. The vehicle control device according to claim 16, wherein:
the effective period of the user identification code is arbitrarily settable by the privileged user.

18. The vehicle control device according to any one of claims 1 to 6, wherein:
the user check means (S80, S120) further performs biometric identity verification processing to check whether the user is the privileged user.

19. The vehicle control device according to any one of claims 1 to 6, wherein:
the user check means (S80, S120) further checks whether vehicle identification information held by an electric toll collection system coincides with the vehicle.

20. The vehicle control device according to claim 1 or 2, further comprising:
type check means (S40) that checks whether the distributed data is for the vehicle by vehicle type identification information, which is specific to each vehicle type and acquired from a user item carried by the privileged user when the privileged user uses the vehicle.

21. A vehicle control device for rewriting data stored therein based on rewrite data distributed through a radio communication network (11), the vehicle control device comprising:
a reception means (S10, S30) that receives vehicle type identification information, which is specific to each vehicle type and stored in a user item carried by a privileged user who is previously designated as a vehicle user permitted to rewrite the data; and
a type check means (S40) that checks whether the distributed data is for the vehicle by vehicle type identification information data.

22. The vehicle control device according to claims 21, further comprising:
a user check means (S80, S120) that checks whether a user is the privileged user and permits the user to rewrite the data on condition that the user is identified as the privileged user.

23. The vehicle control device according to claims 21, further comprising:
a user check means (S80, S120) that checks whether a user is the privileged user, and prohibits the user from rewriting the data when the user is not identified as the privileged user.

24. A data rewriting system comprising:
a control center (10) that distributes rewrite data through a radio communication network (11); and
a vehicle control device that rewrites data stored therein based on the rewrite data distributed through the radio communication network (11),
wherein the vehicle control device includes:
a user check means (S80, S120) that performs user identification check processing for checking whether a user is a privileged user designated as a vehicle user permitted to rewrite the data; and
a prohibition means (S90) that prohibits the user from rewriting the data when the user is not identified as the privileged user.

25. A data rewriting system comprising:
a control center (10) that distributes rewrite data through a radio communication network (11); and
a vehicle control device that rewrites data stored therein based on the rewrite data distributed through the radio communication network (11),
wherein the vehicle control device includes:
a user check means (S80, S120) that performs user identification check processing for checking whether a user is a privileged user designated as a vehicle user permitted to rewrite data; and
a permission means (S100) that permits the user to rewrite the data on condition that the user is identified as the privileged user.

26. The data rewriting system according to claim 25, wherein:
a user identification code is set individually for the privileged user of each vehicle and stored in the vehicle, the user identification code being also stored in a user item (29, 41) which is carried by the privileged user when the privileged user uses the vehicle; and
the user check means (S80, S120) performs the user identification check by verifying whether the user identification code stored in the vehicle coincides with the user identification code acquired from the user item.

27. The data rewriting system according to claim 25, wherein:
a user identification code is set individually for the privileged user of each vehicle and stored in the vehicle; and
the user check means (S80, S120) performs the user identification check by verifying whether the user identification code stored in the vehicle coincides with a user identification code manually inputted by the user.

28. The data rewriting system according to claim 25, wherein:
a user identification code is set individually for the privileged user of each vehicle and stored in the vehicle, the user identification code being also stored in a user item (29, 41) which is carried by the privileged user when the privileged user uses the vehicle; and
the user check means (S80, S120) performs the user identification check by verifying whether the user identification code stored in the vehicle coincides with the user identification code acquired from the user item and a user identification code manually inputted by the user.

29. The data rewriting system according to claim 28, wherein:
two different user identification codes are stored in the vehicle and are used for verifying whether the user identification code acquired from the user item and the user identification code manually inputted by the user, respectively.

30. The data rewriting system according to any one of claims 26, 28 and 29, wherein:
the user identification code acquired from the user item and stored is cleared every time an ignition switch is turned off.

31. The data rewriting system according to any one of claims 27 to 29, wherein:
the user is permitted to manually input the user identification code, only when the user uses the vehicle by the use of a main key (29).

32. The data rewriting system according to any one of claims 28 or 29, wherein:
the user is permitted to manually input the user identification code, only when the user acquires a user identification code stored in a user item carried by the privileged user when the privileged user uses the vehicle.

33. The data rewriting system according to any one of claims 26 to 29, wherein:
the user identification code stored in the vehicle is rewritten, when the data is rewritten.

34. The data rewriting system according to any one of claims 26 to 29, wherein:
the user identification code stored in the vehicle is stored in a storage region not to be rewritten by rewriting the data.

35. The data rewriting system according to any one of claims 26 to 29, wherein:
the user identification code stored in the vehicle is changeable by a command distributed through the radio communication network.

36. The data rewriting system according to any one of claims 26 to 29, wherein:
the user identification code stored in the vehicle is changeable by a mobile phone (50).

37. The data rewriting system according to any one of claims 26 to 29, wherein:
the user identification code stored in the vehicle is changeable by an interface (26) mounted in the vehicle.

38. The data rewriting system according to any one of claims 26 to 29, wherein:
the user identification code stored in the vehicle is changeable every time a pre-set effective period passes.

39. The data rewriting system according to any one of claims 26 to 29, wherein:
the user identification code stored in the vehicle is made ineffective when a pre-set effective period passes.

40. The data rewriting system according to claim 39, wherein:
the effective period of the user identification code is arbitrarily settable by the privileged user.

41. The data rewriting system according to any one of claims 24 to 29, wherein:
the user check means (S80, S120) further performs biometric identity verification processing to check whether the user is the privileged user.

42. The data rewriting system according to any one of claims 24 to 29, wherein:
the user check means (S80, S120) further checks whether vehicle identification information held by an electric toll collection system coincides with the vehicle.

43. The data rewriting system according to claim 24 or 25, wherein:
the vehicle control device further includes:
type check means (S40) that checks whether the distributed data is for the vehicle by vehicle type identification information, which is specific to each vehicle type and acquired from a user item carried by the privileged user when the privileged user uses the vehicle.

44. A data rewriting system comprising:
a control center (10) that distributes rewrite data through a radio communication network (11); and
a vehicle control device that rewrites data stored therein based on the rewrite data distributed through the radio communication network (11),
wherein the vehicle control device includes:
a reception means (S10, S30) that receives vehicle type identification information, which is specific to each vehicle type and stored in a user item carried by a privileged user who is previously designated as a vehicle user permitted to rewrite the data; and
a type check means (S40) that checks whether the distributed data is for the vehicle by vehicle type identification information data.

45. The data rewriting system according to claims 44, wherein:
the vehicle control device further includes:
a user check means (S80, S120) that checks whether a user is the privileged user and permits the user to rewrite the data on condition that the user is identified as the privileged user.

46. The data rewriting system according to claims 44, wherein:
the vehicle control device further includes:
a user check means (S80, S120) that checks whether a user is the privileged user, and prohibits the user from rewriting the data when the user is not identified as the privileged user.
